# EUROPÄISCHE PATENTANMELDUNG

(11) **EP 0 609 491 A1**
(43) Veröffentlichungstag der Anmeldung: **10.08.1994**
(21) Anmeldenummer: 93114831.6
(22) Anmeldetag: 15.09.1993
(51) Int. Cl.: F16F 15/12, F16D 25/10, F16D 25/08

(54) **Antriebsstrang eines Kraftfahrzeugs**

(30) Priorität: 05.02.1993 DE 4303303
(71) Anmelder: Firma Carl Freudenberg, D-69469 Weinheim (DE)
(72) Erfinder: Eckel, Hans-Gerd, Dr., D-69515 Laudenbach (DE)

(57) **Zusammenfassung**

Antriebsstrang eines Kraftfahrzeug, bei dem zur bedarfsweisen Unterdrückung der Kraftübertragung eine Trennkupplung (1) zwischen Motor und Getriebe vorgesehen ist. Auf der Getriebeeingangswelle (2) des Getriebes ist ein Drehschwingungstilger (3) angeordnet.

## Beschreibung

Die Erfindung betrifft einen Antriebsstrang eines Kraftfahrzeugs, bei dem zur bedarfsweisen Unterdrückung der Kraftübertragung eine Trennkupplung zwischen Motor und Getriebe vorgesehen ist.

Ein derartiger Antriebsstrang ist allgemein bekannt. Dabei ist allerdings zu beachten, daß der Antriebsstrang während der bestimmungsgemäßen Verwendung durch die Verbrennungsmaschine zu Schwingungen angeregt wird, die als Körper- und Luftschall die Umgebung und die Fahrgastzelle anregen. Neben den Getriebegeräuschen im Zugbetrieb bei Teil- und Vollast als auch im Schubbetrieb wird auch das Getrieberasseln im Motor-Leerlauf oft als störend empfunden.

Der Erfindung liegt die Aufgabe zugrunde, einen Antriebsstrang der vorbekannten Art derart weiterzuentwickeln, daß Schwingungen deutlich reduziert werden und dadurch die Entstehung von unerwünschten Geräuschen weitgehend vermieden wird. Desweiteren wird die Getriebebeanspruchung reduziert.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Im Rahmen der vorliegenden Erfindung ist es vorgesehen, daß auf der Getriebeeingangswelle des Getriebes ein Drehschwingungstilger angeordnet ist. Hierbei ist von Vorteil, daß die Schwingungen, die vom Motor über die Getriebeeingangswelle in das Getriebe übertragen werden, wirkungsvoll reduziert werden können. Die Reduzierung von Schwingungen bedingt außerdem eine Verringerung der Brumm- und Rasselgeräusche. Die Anordnung des Drehschwingungstilgers auf der Getriebeeingangswelle ist erforderlich, um schwingungsbedingte Rasselgeräusche im Leerlauf der angeschlossenen Verbrennungskraftmaschine reduzieren zu können, weil sich die Getriebeeingangswelle bei laufendem Motor und geschlossener Trennkupplung stets in Rotation befindet.

Nach einer vorteilhaften Ausgestaltung kann der Drehschwingungstilger einen Nabenring und einen den Nabenring mit radialem Abstand umschließenden Schwungring umfassen, die durch ein Federelement aus elastomerem Werkstoff aufeinander abgestützt sind, wobei der Nabenring relativ verdrehbar auf der Getriebeeingangswelle gelagert ist, wobei eine Hilfskupplung zur Unterdrückung von Relativverdrehungen des Nabenrings vorgesehen ist und wobei die Hilfskupplung und die Trennkupplung durch ein gemeinsames Stellglied nur gemeinsam in eine Offen- oder Schließstellung bringbar sind. Bei einer derartigen Ausgestaltung ist von hervorzuhebender Bedeutung, daß die Reaktionskraft beim Öffnen der Trennkupplung genutzt wird, um die Hilfskupplung zu öffnen und den Momentenfluß zwischen dem Drehschwingungstilger und der Getriebeeingangswelle zu unterbrechen. Die Trennkupplung und die Hilfskupplung sind funktionstechnisch derart miteinander gekoppelt, daß bei eingerückter Trennkupplung auch die Hilfskupplung eingerückt ist und eine kraftschlüssige Verbindung zwischen der Getriebeeingangswelle und dem Drehschwingungstilger besteht.

Im ausgerückten Zustand der Trennkupplung, beispielsweise bei einem Gangwechsel, wenn die Kraftübertragung zwischen Motorabtriebswelle und Getriebeeingangswelle getrennt ist, befindet sich auch die Hilfskupplung in Offenstellung und der Drehschwingungstilger ist relativ zur Getriebeeingangswelle verdrehbar.

Der Drehschwingungstilger ist hinsichtlich seiner Eigenfrequenz auf die jeweils zu tilgenden Schwingungen abgestimmt. Darüber hinaus können auch in der Eigenfrewuenz verstellbare Tilger, z.B. adaptive mit der Drehzahl sich ändernde Tilger eingesetzt werden.

Der Drehschwingungstilger kann verschiedenartig gestaltet sein und beispielsweise zwei unterschiedliche Tilgermassen aufweisen, um Schwingungen in einem breiteren Frequenzbereich zu tilgen. Bedarfsweise kann der Drehschwingungstilger auch zusätzlich eine hydraulische Bedämpfung aufweisen. Neben der Überlastschutzfunktion der Hilfskupplung ist eine gezielt einstellbare Reibdämpfung im Bereich der Kupplung ebenfalls vorstellbar.

Es ist von Vorteil, den Drehschwingungstilger bei ausgerückter Schaltkupplung ebenfalls von der Getriebeeingangswelle abzukuppeln, weil die Drehzahlangleichung der Getriebeeingangswelle an die entsprechende Drehzahl, die dem einzulegenden Gang entspricht, durch die Getriebesynchronisation möglichst rasch erfolgen soll und dazu eine möglichst geringe Trägheitsmasse der Getriebeeingangswelle erforderlich ist.

Das Abkuppeln des Drehschwingungstilgers verhindert dadurch eine mechanische Überbeanspruchung der Getriebesynchronisation. Eine Drehschwingungstilgung bei ausgerückter Trennkupplung ist außerdem entbehrlich, da eine Schwingungsanregung des Antriebsstrangs wegen dieser Trennung nicht vorliegt.

Von besonderer Bedeutung ist der erfindungsgemäße Antriebsstrang, wenn er in frontgetriebenen Fahrzeugen Verwendung findet. Aufgrund der beengten Einbauverhältnisse war eine Drehschwingungstilgung und eine damit verbundene Geräuschreduzierung bisher nicht möglich.

Durch die hydraulische Betätigung von Trennkupplung und Hilfskupplung ist ein weiches Ein- und Auskuppeln bei einer langen Gebrauchsdauer gewährleistet, wobei das Stellglied über die gesamte Gebrauchsdauer weitgehend wartungsfrei arbeitet. Im Vergleich zu einer mechanischen Betätigung, beispielsweise über einen Seilzug, werden verbesserte Gebrauchseigenschaften während einer langen Gebrauchsdauer gewährleistet.

Wenn beide Kupplungen eingerückt sind, ist sowohl die Kraftübertragung zwischen Motor und Getriebe als die Schwingungsreduzierung im Getriebe sowie im Antriebsstrang gegeben.

Außerdem ist von hervorzuhebender Bedeutung, daß im eingerückten Zustand der Hilfskupplung eine übereinstimmende, vorteilhafte Wirkung bezogen auf die Schwingungsreduzierung der Getriebeeingangswelle vorliegt und zwar nahezu unabhängig von der Übersetzungsstufe, die eingelegt ist.

Gemäß einer vorteilhaften Ausgestaltung kann die Hilfskupplung als Kegelkupplung ausgebildet sein. Die beiden Kupplungshälften der Kegelkupplung weisen auf den einander zugewandten Umfangsflächen einen Reibbelag auf, der im eingerückten Zustand der Hilfskupplung eine Mitnahme des Drehschwingungstilgers gewährleistet. Die eine der Kupplungshälften kann durch den Nabenring des Drehschwingungstilgers gebildet sein, während die andere Kupplungshälfte drehfest mit der Getriebeeingangswelle verbunden ist. Der Nabenring stellt in diesem Falle den entlang der Bewegungsachse relativ beweglichen Teil dar und kann beispielsweise durch eine Tellerfeder, die in einer Abstützung geführt ist, mit der zweiten Kupplungshälfte in Eingriff gebracht werden.

Die Hilfskupplung kann Kupplungshälften aufweisen, die in eingerücktem Zustand der Kupplungen durch die Kraft einer Tellerfeder, die einer der Kupplungshälften zugeordnet ist, aneinander angelegt werden. Der einfache Aufbau der Hilfskupplung, bestehend aus einer geringen Anzahl preiswerter Bauteile, bedingt eine große Wirtschaftlichkeit des gesamten Antriebsstrangantriebes bei außerordentlich vorteilhaften Gebrauchseigenschaften.

Ein Ausschnitt aus dem Antriebsstrang eines Antriebsstrangs ist in der nachfolgenden Zeichnung gezeigt und wird näher beschrieben.

In der Zeichnung ist ein Ausschnitt aus dem Antriebsstrang einer Motor-Getriebeeinheit eines Kraftfahrzeugs gezeigt, wobei zur Kraftübertragung zwischen dem Motorabtrieb und der Getriebeeingangswelle 2 eine konventionelle hydraulisch betätigbare Trennkupplung 1 vorgesehen ist. Auf der Getriebeeingangswelle 2 ist ein Drehschwingungstilger 3 angeordnet, der durch einen Nabenring 4, ein den Nabenring 4 außenumfangsseitig umschließendes Federelement 6 und einen Schwungring 5 gebildet ist. Der Nabenring 4 bildet gleichzeitig die Kupplungshälfte 12, die mit ihrer kegelförmigen Reibfläche einen Bestandteil der Hilfskupplung 7 bildet. Die Hilfskupplung 7 und die Trennkupplung 1 sind durch ein gemeinsames Stellglied 8 betätigbar, wobei im eingerückten Zustand der beiden Kupplungen 1, 7 die Kraftübertragung zwischen Motorabtriebswelle und Getriebeeingangswelle 2 besteht und die beiden Kupplungshälften 12, 13 der Hilfskupplung 7 miteinander in Eingriff sind. Die Reaktionskraft der Trennkupplung 1 wird zum Öffnen der Hilfskupplung 7 genutzt. Bei eingerückter Hilfskupplung 7 stellt sich eine reibschlüssige Verbindung ein, die bewirkt, daß der Drehschwingungstilger 3 gemeinsam mit der Getriebeeingangswelle 2 rotiert und dadurch die Drehschwingungen tilgt.

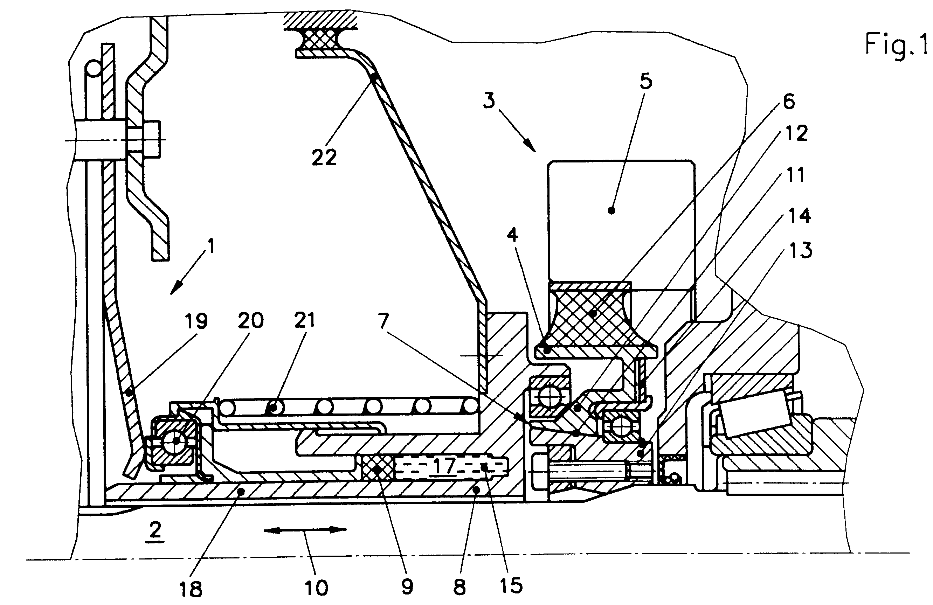

In Fig. 1 ist der eingerückte Zustand von Trennkupplung 1 und Hilfskupplung 7 gezeigt. Das Stellglied 8, ist durch eine Kolben-/Zylindereinheit 9 gebildet. Die Kolben-/Zylindereinheit 9 ist entspannt. Das im Steuerraum 15 befindliche Steuermedium 17 ist nicht über Druck beaufschlagt, so daß das Ausrücklager 20 mit geringer axialer Vorspannung, bedingt durch die Schraubendruckfeder 21, an der Tellerfeder 19 der Trennkupplung 1 anliegt.

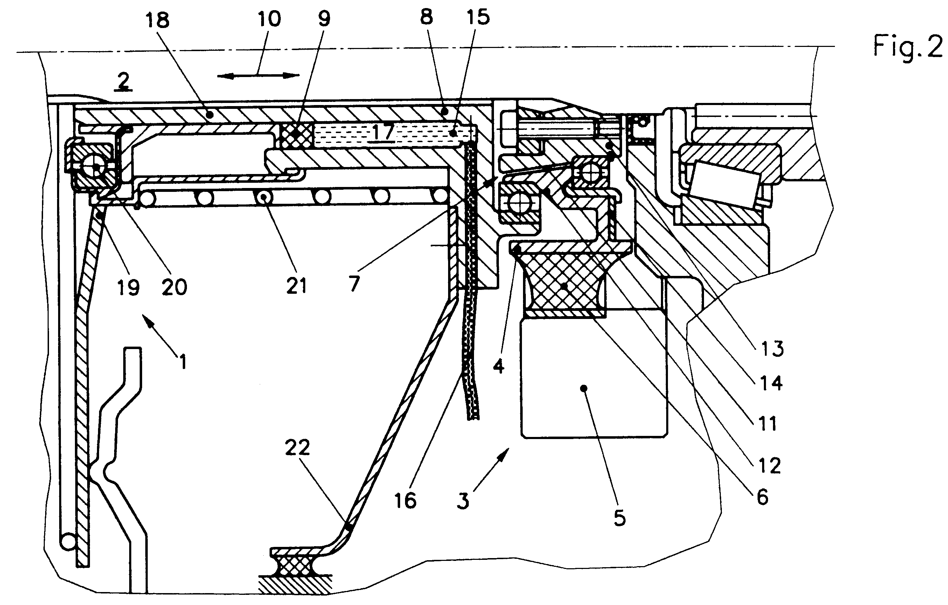

In Fig. 2 ist das Steuermedium 17 im Steuerraum 15 über die Versorgungsleitung 16 druckbeaufschlagt, so daß durch die Kolben-/Zylindereinheit 9 gegen die Federkraft der Tellerfeder 19 der Trennkupplung 1 und der Tellerfeder 14 der Hilfskupplung 7 ein Ausrücken beider Kupplungen erfolgt. Der Träger 18 des Ausrücklagers 20 umschließt die Getriebeeingangswelle 2 mit radialem Abstand und ist elastisch an einer Aufhängung 22 befestigt. Die Tellerfedern 19 der Trennkupplung 1 bilden das Widerlager, wobei durch die Reaktionskraft beim Öffnen der Trennkupplung 1 der Momentenfluß zwischen dem Drehschwingungstilger 3 und der Getriebeeingangswelle 2 unterbrochen wird. Bei zunehmendem Druckaufbau innerhalb des Steuerraums 15 wird die Kupplungshälfte 12, die dem Nabenring 4 entspricht, gegen die Federkraft der Tellerfeder 14 bewegt, so daß die beiden Kupplungshälften 12, 13 außer Eingriff gelangen. In diesem Betriebszustand ist der Drehschwingungstilger 3 von der Getriebeeingangswelle 2 abgekoppelt. Die Drehzahlangleichung der Getriebeeingangswelle 2 ist durch die verringerte Trägheitsmasse vereinfacht und die Synchronisation wird dadurch mechanisch weniger belastet.

Nachdem der Gangwechsel erfolgt ist, wird die Trennkupplung 1 wieder geschlossen. Gleichzeitig wird mittels der Reibflächen der Kupplungshälften 11, 12 der Hilfskupplung 7 die Drehzahlangleichung des Drehschwingungstilgers 3 an die Getriebeeingangswelle 2 vorgenommen und die kraftschlüssige Verbindung zwischen dem Drehschwingungstilger 3 und der Getriebeeingangswelle 2 wiederhergestellt.

## Patentansprüche

1. Antriebsstrang eines Kraftfahrzeugs, bei dem zur bedarfsweisen Unterdrückung der Kraftübertragung eine Trennkupplung zwischen der Motor und Getriebe vorgesehen ist, dadurch gekennzeichnet, daß auf der Getriebeeingangswelle (2) des Getriebes ein Drehschwingungstilger (3) angeordnet ist.

2. Antriebsstrang nach Anspruch 1, dadurch gekennzeichnet, daß der Drehschwingungstilger (3) einen Nabenring (4) und einen den Nabenring (4) mit radialem Abstand umschließenden Schwungring (5) umfaßt, die durch ein Federelement (6) aus elastomerem Werkstoff aufeinander abgestützt sind, daß der Nabenring (4) relativ verdrehbar auf der der Getriebeeingangswelle (2) gelagert ist, daß eine Hilfskupplung (7) zur Unterdrückung von Relativverdrehungen des Nabenrings (4) vorgesehen ist und daß die Hilfskupplung (7) und die Trennkupplung (1) durch ein gemeinsames Stellglied (8) nur gemeinsam in eine Offen- oder Schließstellung bringbar sind.

3. Antriebsstrang nach Anspruch 1 bis 2, dadurch gekennzeichnet, daß das Stellglied (8) durch ein hydraulisch betätigbare Kolben-/Zylindereinheit (9) gebildet ist.

4. Antriebsstrang nach Anspruch 3, dadurch gekennzeichnet, daß die Kolben-/Zylindereinheit (9) eine sich parallel zur Getriebeeingangswelle (2) erstreckende Bewegungsachse (10) aufweist.

5. Antriebsstrang nach Anspruch 1 bis 2, dadurch gekennzeichnet, daß das Stellglied (8) mechanisch betätigbar ist.

6. Antriebsstrang nach Anspruch 1 bis 5, dadurch gekennzeichnet, daß die Kilfskupplung (7) als Kegelkupplung (11) ausgebildet ist.
